# EUROPÄISCHE PATENTANMELDUNG

(11) **EP 3 006 270 A1**
(43) Veröffentlichungstag der Anmeldung: **13.04.2016**
(21) Anmeldenummer: 15002399.2
(22) Anmeldetag: 11.08.2015
(51) Int. Cl.: B60R 13/08

(54) **ISOLIERUNGSVORRICHTUNG FÜR EIN FAHRZEUG UND FAHRZEUG MIT DER ISOLIERUNGSVORRICHTUNG**

(30) Priorität: 09.10.2014 DE 202014008020 U
(71) Anmelder: GM Global Technology Operations LLC, Detroit, MI 48265-3000 (US)
(72) Erfinder: Schaefer, Thilo, 64521 Gross-Gerau (DE)
(74) Vertreter: Spitzfaden, Ralf

(57) **Zusammenfassung**

Die Erfindung betrifft eine Isolierungsvorrichtung (10) für ein Fahrzeug zur geräusch- und/oder feuchtigkeitsisolierenden Anordnung in einem Freiraum (7) zwischen einem Karosserieabschnitt (2) des Fahrzeugs (1), einem Kotflügel (3) des Fahrzeugs (1), einem Schutzmantel (8) des Fahrzeugs und einer Motorhaube (9) des Fahrzeugs (1), wobei die Isolierungsvorrichtung (10) eine Sicherungseinrichtung (12) zur richtigen und dauerhaften Positionierung der Isolierungsvorrichtung (10) im Freiraum (7) aufweist und wobei die Sicherungseinrichtung (12) einen ersten verschwenkbaren Fuß (13) und einen zweiten verschwenkbaren Fuß (14) umfasst.

## Beschreibung

### Technisches Gebiet:

Die Erfindung betrifft eine Isolierungsvorrichtung mit den Merkmalen des Anspruchs 1 und ein Fahrzeug mit der Isolierungsvorrichtung mit den Merkmalen des Anspruchs 12.

### Hintergrund:

Oftmals ist in einem Freiraum zwischen einer Fahrzeugkarosseriewand, einem Kotflügel und einer Kotflügelschutzwand eine Isoliereinrichtung zur Feuchtigkeitsisolierung und/oder zur Isolierung von Antriebsgeräuschen gegenüber einem Fahrgastraum des Fahrzeugs angeordnet.

Beispielsweise beschreibt die Druckschrift DE 10 2012 014 949 A1, die wohl den nächstliegenden Stand der Technik bildet, ein Fahrzeug mit einem Karosserieabschnitt, einem Kotflügel und einer Isolierungsvorrichtung, wobei zwischen dem Karosserieabschnitt und dem Kotflügel ein Freiraum gebildet ist, in dem die Isolierungsvorrichtung zur Geräuschs- und/oder Feuchtigkeitsisolation zwischen einem Antriebsbereich und einem Fahrgastraum des Fahrzeugs angeordnet ist.

### Beschreibung:

Der Erfindung liegt die Aufgabe zugrunde, eine funktional verbesserte Isolierungsvorrichtung bereitzustellen. Diese Aufgabe wird durch eine Isolierungsvorrichtung mit den Merkmalen des Anspruchs 1 und durch ein Fahrzeug mit der Isolierungsvorrichtung mit den Merkmalen des Anspruchs 12. Bevorzugte oder vorteilhafte Ausführungsformen der Erfindung ergeben sich aus den Unteransprüchen, der nachfolgenden Beschreibung und/oder den beigefügten Figuren.

Es wird eine Isolierungsvorrichtung für ein Fahrzeug vorgeschlagen. Das Fahrzeug ist vorzugsweise als ein PKW oder LKW ausgebildet. Das Fahrzeug umfasst einen Karosserieabschnitt, z.B. einen Vorderrahmen des Fahrzeugs, einen Kotflügel, bevorzugt zwischen dem Karosserieabschnitt und dem Kotflügel angeordneten Schutzmantel, der als ein sogenannter Fenderliner ausgebildet ist und eine Motorhaube.

Vorzugsweise verschließt der Karosserieabschnitt einen Antriebsbereich des Fahrzeugs, in dem zum Beispiel ein Motor und/oder die Antriebswelle des Fahrzeugs angeordnet sind. Bevorzugt ist der Antriebsbereich von einer Motorhaube des Fahrzeugs bedeckt. Insbesondere erstreckt sich der Karosserieabschnitt in Richtung eines Fahrgastraums des Fahrzeugs, in dem Insassen Platz nehmen können. Bevorzugt ist der Kotflügel am Karosserieabschnitt angeordnet und steht seitlich von diesem ab. Optional verschließt der Schutzmantel den Kotflügel zum Karosserieabschnitt hin und nach unten, insbesondere zu einem Untergrund hin, auf dem das Fahrzeug steht.

Die Isolierungsvorrichtung ist in einem Freiraum angeordnet. Der Freiraum ist zwischen dem Karosserieabschnitt, dem Kotflügel und Schutzmantel angeordnet und/oder gebildet. Die Isolierungsvorrichtung ist zur Geräuschisolierung, insbesondere gegenüber dem Fahrgastraum, und/oder zur Feuchtigkeitsisolierung, insbesondere gegenüber einer sich an den Kotflügel entgegen der Fahrtrichtung des Fahrzeugs anschließenden Fahrzeugtür in dem Freiraum angeordnet.

Die Isolierungsvorrichtung weist eine Sicherungseinrichtung auf. Optional ergänzend umfasst die Isolierungsvorrichtung einen Grundkörper. Die Sicherungseinrichtung und der Grundkörper sind bevorzugt einstückig und/oder einmaterialig ausgebildet. Insbesondere sind die Sicherungseinrichtung und der Grundkörper in einem selben Fertigungsprozess gefertigt. Beispielsweise schließt sich die Sicherungseinrichtung an den Grundkörper an, insbesondere ist der Grundkörper in einer Einbauposition im Freiraum oben und/oder oberhalb der Sicherungseinrichtung angeordnet. Beispielsweise ist die Sicherungseinrichtung in der Einbauposition im Freiraum unten und/oder unterhalb des Grundkörpers angeordnet.

Die Sicherungseinrichtung ist zur richtigen und dauerhaften Positionierung der Isolierungsvorrichtung im Freiraum ausgebildet. Die Sicherungseinrichtung weist einen ersten verschwenkbaren Fuß und einen zweiten verschwenkbaren Fuß auf. Bevorzugt sind der erste und zweite Fuß quer zum Grundkörper verschwenkbar. Der erste und der zweite Fuß sind vorzugsweise an einem gemeinsamen Ende des Grundkörpers angeordnet. Besonders bevorzugt ist der erste und/oder der zweite Fuß um mindestens 60 Grad, vorzugsweise um mindestens 75 Grad und insbesondere um mindestens 90 Grad gegenüber einer Längserstreckung des Grundkörpers verschwenkbar. Der erste und der zweite Fuß sind vorzugsweise an einem gemeinsamen Ende des Grundkörpers angeordnet.

Vorzugsweise stellt die Sicherungseinrichtung eine richtige Montageposition, insbesondere bei und/oder während der Montage der Sicherungseinrichtung sicher. Die Sicherungseinrichtung verhindert ein Verrutschen und/oder Verdrehen der Isolierungsvorrichtung im Freiraum, insbesondere während der Fahrt des Fahrzeugs. Durch die Sicherstellung der richtigen Montageposition und/oder Positionierung kann die Geräuschs- und/oder Feuchtigkeitsisolierung der Isolierungsvorrichtung insbesondere über eine gesamte Laufzeit des Fahrzeugs sichergestellt werden. Reparaturkosten können dadurch vermieden werden.

In einer bevorzugten Umsetzung der Erfindung ist der erste Fuß zur Überführung der Sicherungseinrichtung von einem inaktiven Zustand in einen aktiven Zustand in eine erste Verschwenkrichtung verschwenkbar. Vorzugsweise ist der zweite Fuß zur Überführung der Sicherungseinrichtung von einem inaktiven Zustand in einen aktiven Zustand in eine zweite Verschwenkrichtung verschwenkbar. Bevorzugt ist die erste Verschwenkrichtung entgegengesetzt zur zweiten Verschwenkrichtung gerichtet.

Vorzugsweise weisen der erste und zweite Fuß im inaktiven Zustand der Sicherungseinrichtung eine unverschwenkte Stellung auf. In der unverschwenkten Stellung sind der erste und zweite Fuß vorzugsweise gleichgerichtet und/oder im Wesentlichen gleichgerichtet mit der Längserstreckung des Grundkörpers angeordnet und/oder ausgerichtet. Im aktiven Zustand der Sicherungseinrichtung weisen der erste und zweite Fuß bevorzugt eine verschwenkte Stellung auf. In der verschwenkten Stellung sind der erste und zweite Fuß z.B. quer zur Längserstreckung des Grundkörpers angeordnet und/oder ausgerichtet. Insbesondere weist die Sicherungseinrichtung in der unverschwenkten Stellung des ersten und zweiten Fußes den inaktiven Zustand auf. In der verschwenkten Stellung des ersten und zweiten Fußes weist die Sicherungseinrichtung bevorzugt den aktiven Zustand auf. Im Speziellen ist die Sicherungseinrichtung im aktiven Zustand zur Sicherstellung der richtigen Montagposition der Isolierungsvorrichtung und als Verdreh- und/oder Verrutschschutz für die Isolierungsvorrichtung ausgebildet. Dadurch kann die Geräuschs- und/oder Feuchtigkeitsisolation durch die Isolierungsvorrichtung in vollem Umfang erreicht werden.

In einer bevorzugten Ausgestaltung der Erfindung umfasst die Sicherungseinrichtung eine erste und eine zweite Scharniereinrichtung, wobei die erste Scharniereinrichtung dem ersten Fuß und die zweite Scharniereinrichtung dem zweiten Fuß zugeordnet ist. Vorzugsweise sind der erste und der zweite Fuß über die Scharniereinrichtungen mit dem Grundkörper schwenkbar verbunden. Insbesondere ist die erste Schaniereinrichtung dazu ausgebildet, den ersten Fuß in die erste Verschwenkrichtung zu verschwenken und die zweite Scharniereinrichtung dazu ausgebildet, den zweiten Fuß in die zweite Verschwenkrichtung zu verschwenken.

Beispielsweise umfasst die erste Scharniereinrichtung eine insbesondere in einer Wirkverbindung stehende erste Aufnahme und einen ersten Schwenkeinsatz. Vorzugsweise umfasst die zweite Scharniereinrichtung eine insbesondere in einer Wirkverbindung stehende zweite Aufnahme und einen zweiten Schwenkeinsatz. Jeder Schwenkeinsatz ist bevorzugt zu einem formschlüssigen Eingriff in die entsprechende Aufnahme ausgebildet. Wenn der erste und/oder der zweite Fuß die verschwenkte Stellung einnimmt, greift der dem entsprechenden Fuß zugeordnete Schwenkeinsatz in die jeweilige Aufnahme ein, wobei er darin formschlüssig gesichert ist, sodass er nicht ungewollt aus der Aufnahme gelöst werden kann. Insbesondere ist der erste und der zweite Fuß dadurch sicher in der verschwenkten Stellung gehalten.

Eine bevorzugte Ausführungsform der Erfindung sieht vor, dass die Aufnahmen im Grundkörper integriert, zum Beispiel in diese eingeformt und/oder eingeschäumt sind. Insbesondere ist die erste Aufnahme auf einer ersten Seitenfläche des Grundkörpers und die zweite Aufnahme auf einer zweiten Seitenfläche, die der ersten Seitenfläche gegenüberliegt, angeordnet. Beispielsweise sind die Aufnahmen als Aussparungen im Grundmaterial des Grundkörpers ausgebildet.

Vorzugsweise ist der erste Schwenkeinsatz am oder auf dem ersten Fuß und der zweite Schwenkeinsatz am oder auf dem zweiten Fuß angeordnet. Insbesondere sind die Schwenkeinsätze stoffschlüssig mit dem ihm zugeordneten Fuß verbunden, im Speziellen an oder auf diesem geschäumt und/oder an oder auf diesen angeformt. Beispielsweise ist der Schwenkeinsatz als eine vom entsprechenden Fuß abstehende Nase oder als ein vom Fuß abstehender Fortsatz ausgebildet.

In einer bevorzugten konstruktiven Ausgestaltung der Erfindung bildet jede Aufnahme einen Endanschlag für den entsprechenden Schwenkeinsatz. Dadurch wird gewährleistet, dass der erste und zweite Fuß um maximal 120 Grad, vorzugsweise um maximal 110 Grad und insbesondere um maximal 100 Grad gegenüber dem Grundkörper, insbesondere gegenüber der Längserstreckung des Grundkörpers, verschwenkbar ist.

In einer bevorzugten Umsetzung der Erfindung umfasst die erste Scharniereinrichtung ein erstes Filmscharnier und die zweite Scharniereinrichtung ein zweites Filmscharnier, wobei das erste Filmscharnier dem ersten Fuß und das zweite Filmscharnier dem zweiten Fuß zugeordnet ist. Vorzugsweise ist der Grundkörper über das erste Filmscharnier mit dem ersten Fuß und über das zweite Filmscharnier mit dem zweiten Fuß schwenkbar verbunden. Insbesondere ist das erste Filmscharnier an einem Ende mit dem Grundkörper und an einem anderen Ende mit dem ersten Fuß, bevorzugt stoffschlüssig, z.B. durch Aufdampfen auf den Grundkörper, verbunden. Insbesondere ist das erste Filmscharnier an einem Ende mit dem Grundkörper und an einem anderen Ende mit dem ersten Fuß, bevorzugt stoffschlüssig, verbunden. Optional ist das zweite Filmscharnier an einem Ende mit dem Grundkörper und an einem anderen Ende mit dem zweiten Fuß, bevorzugt stoffschlüssig, verbunden. Insbesondere ist jedes Filmscharnier dazu ausgebildet, den ihm zugeordneten Fuß um eine Unterseite des Grundkörpers herum zu verschwenken. Hierbei ist es besonders bevorzugt, dass das erste Filmscharnier so am Grundkörper angeordnet ist, dass es den ersten Fuß in eine erste Verschwenkrichtung verschenkt und dass das zweite Filmscharnier den zweiten Fuß in eine zweite Verschwenkrichtung verschwenkt, wobei die zweite Verschwenkrichtung eine Gegenrichtung zur ersten Verschwenkrichtung bildet. Jedes Filmscharnier weist hierfür bevorzugt eine über eine Breite des der Unterseite des Grundkörpers hinausreichende Gesamtlänge auf. Dadurch kann jedes Filmscharnier in der verschwenkten Stellung des entsprechenden Fußes an der Unterseite des Grundkörpers anliegen und den diesen in die entsprechende Verschwenkrichtung führen und/oder ausrichten.

In einer bevorzugten Ausführungsform der Erfindung weist der Grundkörper eine erste Anlagefläche auf. Die erste Anlagefläche ist insbesondere unterschiedlich zu den Seitenflächen angeordnet und/oder ausgebildet, in denen die Aufnahmen der Scharniereinrichtungen integriert ist. Vorzugsweise ist die erste Anlagefläche zur z.B. formschlüssigen Anlage an dem Karosserieabschnitt ausgebildet. Optional ergänzend weist der Grundkörper eine zweite Anlagefläche auf, die zur bevorzugt formschlüssigen Anlage an den Kotflügel ausgebildet ist. Insbesondere ist die erste Anlagefläche gegenüber der zweiten Anlagefläche angeordnet. Besonders bevorzugt weist der Grundkörper eine dritte Anlagefläche auf, die z.B. an einem oberen Ende, insbesondere kopfseitig, am Grundkörper angeordnet ist. Vorzugsweise ist die dritte Anlagefläche zur bevorzugt formschlüssigen Anlage an der Motorhaube ausgebildet.

Möglich ist im Rahmen der Erfindung, dass die erste, die zweite und/oder die dritte Anlagefläche einen Formverlauf, Radius und/oder Radienverlauf aufweisen, der an einen Formverlauf, Radius und/oder Radienverlauf des Karosserieabschnitts, des Kotflügels bzw. der Motorhaube angepasst ist und/oder diesem gleicht. Optional ist der Formverlauf, Radius und/oder Radienverlauf der ersten Anlagefläche an den Formverlauf, Radius und/oder Radienverlauf des Karosserieabschnitts und der Formverlauf, Radius und/oder Radienverlauf der zweiten Anlagefläche an den Formverlauf, Radius und/oder Radienverlauf des Kotflügels angepasst und/oder gleicht diesem. Beispielsweise ist der Formverlauf, Radius und/oder Radienverlauf der dritten Anlagefläche an den Formverlauf, Radius und/oder Radienverlauf der Motorhaube angepasst und/oder gleicht diesem. Dadurch kann in vorteilhafter Weise gewährleistet werden, dass der Grundkörper mit der ersten, zweiten und/oder dritten Anlagefläche passgenau positionierbar ist und formschlüssig im Freiraum sicherbar ist. Durch die erste, zweite und dritte Anlagefläche wird sichergestellt, dass der Grundkörper zu beiden Seiten anliegen und formschlüssig gegen den Karosserieabschnitt, den Kotflügel und/oder die Motorhaube sicherbar ist. Dadurch wird ein korrekter Sitz der Isolierungsvorrichtung im Freiraum sichergestellt und die Isolierungswirkung hinsichtlich der Feuchtigkeit und/oder der Geräuschbildung gewährleistet.

In einer bevorzugten Umsetzung der Erfindung weist die Isolierungsvorrichtung an mindestens einer der Anlageflächen, z. B. an der zweiten Anlagefläche eine offene Höhlung auf. Dadurch ist die entsprechende mindestens eine Anlagefläche in einer Wannenform mit einem umlaufenden Rand oder Wulst ausgebildet. Vorzugsweise ist die entsprechende mindestens eine Anlagefläche in ihrer Wannenform der Form des Kotflügels bzw. des Karosserieabschnitts und/oder der Motorhaube folgend ausgebildet, insbesondere an die entsprechende Form angepasst. Möglich im Rahmen der Erfindung ist, dass in die offene Höhlung der eine die Geräuschs- und/oder Feuchtigkeitsisolation verstärkende Einlage und/oder Einsatz einlegbar ist. Vorzugsweise kann die Einlage und/oder der Einsatz formschlüssig in der offenen Höhlung gehalten werden. Alternativ oder optional ergänzend kann die Einlage stoffschlüssig in der offenen Höhlung befestigt sein, insbesondere darin angeformt und/oder eingeschäumt, um einen sicheren Halt darin zu gewährleisten. Alternativ oder optional ergänzend weist der Grundkörper eine Rippe auf, die an die zweite oder dritte Anlagefläche angeformt oder angeschäumt ist. Die Rippe ist zur Versteifung und zum Toleranzausgleich gegenüber der Motorhaube und/oder dem Kotflügel ausgebildet. Dadurch kann sie die Geräuschs- und/oder Feuchtigkeitsisolation der Isolierungsvorrichtung verstärken.

In einer bevorzugten Ausgestaltung der Erfindung ist die Isolierungsvorrichtung als ein Schaumformteil, insbesondere als ein Schaumpressformteil, ausgebildet. Insbesondere ist die Isolierungsvorrichtung aus einem Polyethylen-Schaum (PE-Schaum) gebildet. Beispielsweise ist das Schaumformteil in einem Press-, Dampf- und/oder Schäumprozess gefertigt. Hierbei wird bevorzugt ein Form-Press-Pinch-Werkzeug verwendet. Hierbei handelt es sich um ein einfaches Auf-Zu-Werkzeug, das eine kostengünstige Herstellung der Isoliervorrichtung erlaubt. Insbesondere können der Grundkörper, die Sicherungseinrichtung sowie die erste und zweite Scharniereinrichtung in einem gemeinsamen Fertigungsschritt gefertigt werden. Dadurch kann ein Materialeinsatz für die Isolierungsvorrichtung optimal ausgenutzt und Kosten eingespart werden.

Ein weiterer Gegenstand der Erfindung betrifft ein Fahrzeug mit dem Karosserieabschnitt, dem Kotflügel, dem Schutzmantel und mit der Motorhaube. Optional ergänzend weist das Fahrzeug den Antriebsbereich und den Fahrgastraum auf. Das Fahrzeug umfasst die Isolierungsvorrichtung nach der bisherigen Beschreibung und/oder nach den Ansprüchen 1 bis 11.

Bevorzugt stehen der erste Fuß und der zweite Fuß im aktiven Zustand der Sicherungseinrichtung und in der verschwenkten Stellung des ersten und zweiten Fußes auf dem Schutzmantel auf. Optional ergänzend steht auch die Unterseite des Grundkörpers auf dem Schutzmantel auf. Vorzugsweise sichern der erste und zweite Fuß die Isolierungsvorrichtung fußseitig gegen ein Verrutschen und/oder Verdrehen im Freiraum, insbesondere während der Fahrt des Fahrzeugs. Besonders bevorzugt sind der erste und zweite Fuß im aktiven Zustand der Sicherungseinrichtung gegenseitig im verschwenkten Zustand gehalten und/oder verrastet und dadurch gegen ein ungewolltes Zurückschwenken gesichert. Dies ist insbesondere in Zusammenwirkung mit dem Aufstehen des ersten und zweiten Fußes auf dem Schutzmantel und/oder mit dem Abstützen des ersten und zweiten Fußes gegen den Schutzmantel umsetzbar. Insbesondere sind der erste und der zweite Fuß in der verschwenkten Stellung und durch das Aufstehen auf dem Schutzmantel nach unten formschlüssig gesichert, sodass ein Zurückschwenken verhindert ist. Die Sicherung wird in vorteilhafter Weise durch die Schwenkeinsätze, die in die Aufnahmen formschlüssig eingreifen verstärkt..

In einer bevorzugten Ausführungsform ist zwischen dem Karosserieabschnitt, dem Kotflügel, dem Schutzmantel und der Motorhaube der Freiraum angeordnet. Insbesondere ist die Isolierungsvorrichtung in dem Freiraum zur Geräusch- und/oder Feuchtigkeitsisolation angeordnet. Vorzugsweise liegt die Isolierungsvorrichtung mit der ersten Anlagefläche am Karosserieabschnitt, mit der zweiten Anlagefläche am Kotflügel und mit der dritten Anlagefläche an der Motorhaube an und ist dadurch an den Anlageflächen formschlüssig gehalten. Insbesondere ist der Grundkörper formschlüssig zwischen dem Karosserieabschnitt, dem Kotflügel und der Motorhaube befestigt.

Vorzugsweise werden zur Montage der Isolierungsvorrichtung der erste und der zweite Fuß zuerst verschwenkt, insbesondere von der unverschwenkten Stellung in die verschwenkte Stellung überführt. Anschließend wird der Schutzmantel zwischen dem Karosserieabschnitt und dem Kotflügel angeordnet. Dadurch stehen der erste und zweite Fuß in der verschwenkten Stellung auf dem Schutzmantel auf und sind gegen ein Zurückschwenken in die unverschwenkten Stellung formschlüssig gesichert.

Optional ergänzend wird der Karosserieabschnitt vom Untergrund angehoben. Vorzugsweise wird die Isolierungsvorrichtung um ihre Längsachse verdreht oder sogar verkehrt herum, insbesondere mit der Kopfseite voran, durch einen Spalt zwischen dem Karosserieabschnitt und dem Kotflügel oder zwischen der Motorhaube und dem Kotflügel in den Freiraum eingesteckt.

Optional ergänzend ist vorgesehen, dass die in den Freiraum eingesteckte Isolierungsvorrichtung um eine gedachte Drehachse, die entlang der Längserstreckung der Isolierungsvorrichtung oder bei kopfseitigem Einstecken waagrecht zur Längserstreckung der Isolierungsvorrichtung verläuft, z.B. um 90 Grad gedreht wird, sodass die Sicherungseinrichtung richtig im Freiraum positioniert wird und die formschlüssige Fixierung des Grundkörpers gegenüber dem Karosserieabschnitt, der Motorhaube und dem Kotflügel umgesetzt wird.

Vorzugsweise wird die Isolierungsvorrichtung in einem Auf-Zu-Werkzeug, beispielsweise in einem Form-Press-Pinch-Werkzeug, geschäumt. Dadurch kann die Isolierungsvorrichtung als ein kostengünstiges und materialsparendes Schaumformteil gefertigt werden.

Die vorstehenden Verfahrensschritte können in ihrer Reihenfolge vertauscht werden.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine Draufsicht von oben auf einen Schnitt entlang der Schnittlinie A-A durch ein Fahrzeug;
- Figur 2: eine Seitenansicht einer Außenseite eines Kotflügels des Fahrzeugs aus Figur 1;
- Figur 3: eine Isolierungsvorrichtung zum Einsatz in einen Freiraum zwischen einer Fahrzeugkarosserie, einer Motorhaube und dem Kotflügel des Fahrzeugs aus Fig. 1;
- Figur 4: eine Schnittansicht der Isolierungsvorrichtung aus Figur 3 entlang der Schnittlinie B-B;
- Figur 5: die in den Freiraum eingesetzte Isolierungsvorrichtung aus Figur 3;
- Figur 6: eine alternative Isolierungsvorrichtung mit einer Sicherungseinrichtung im inaktiven Zustand, wobei ein erster Fuß und ein zweiter Fuß eine unverschwenkte Stellung aufweisen;
- Figur 7: die alternative Isolierungsvorrichtung aus Figur 6 mit der Sicherungseinrichtung, wobei der erste Fuß eine verschwenkte Stellung und der zweite Fuß eine unverschwenkte Stellung aufweist;
- Figur 8: die Isolierungsvorrichtung aus den Figuren 6 und 7 mit der Sicherungseinrichtung im aktiven Zustand, wobei der erste und zweite Fuß die verschwenkte Stellung aufweisen.

Einander entsprechende oder gleiche Teile sind in den Figuren jeweils mit den gleichen Bezugszeichen versehen.

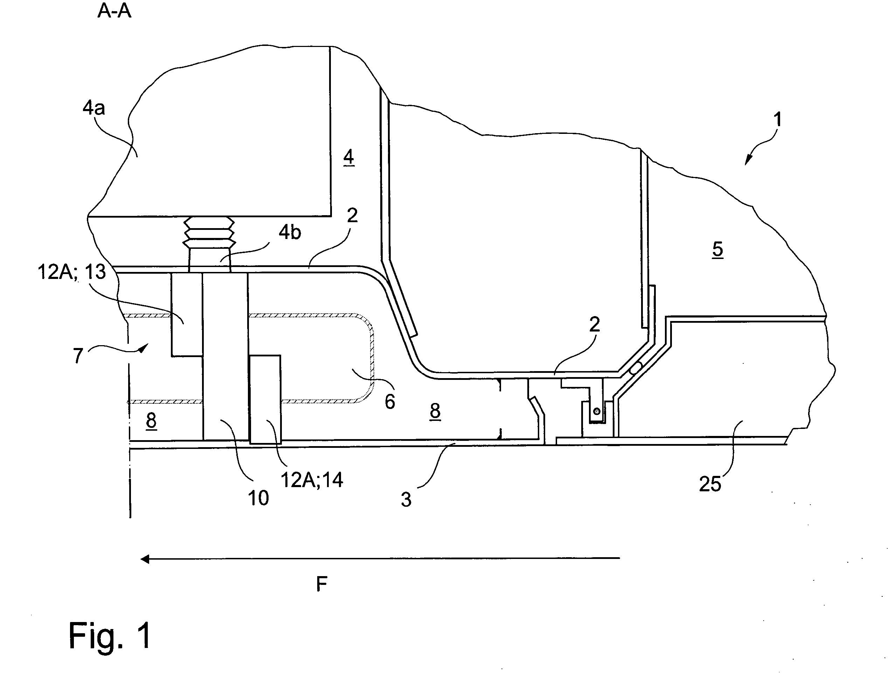

Figur 1 zeigt eine Schnittansicht eines Fahrzeugs 1 als ein Ausführungsbeispiel der Erfindung, wobei die Schnittlinie parallel zu einer Längserstreckung des Fahrzeugs 1 verläuft. Das Fahrzeug 1 weist einen Karosserieabschnitt 2, insbesondere einen Vorderrahmen, einen seitlich am Karosserieabschnitt 2 angeordneten und von diesem abstehenden Kotflügel 3, einen Antriebsbereich 4 und einen Fahrgastraum 5 auf. Im Antriebsbereich 4 sind beispielsweise ein Motorblock 4a und eine Antriebswelle 4b zum Antrieb eines durch einen Schutzmantel 8 Rades 6 des Fahrzeugs 1 angeordnet. Im Fahrgastraum 5 nehmen Insassen des Fahrzeugs 1 insbesondere während der Fahrt Platz.

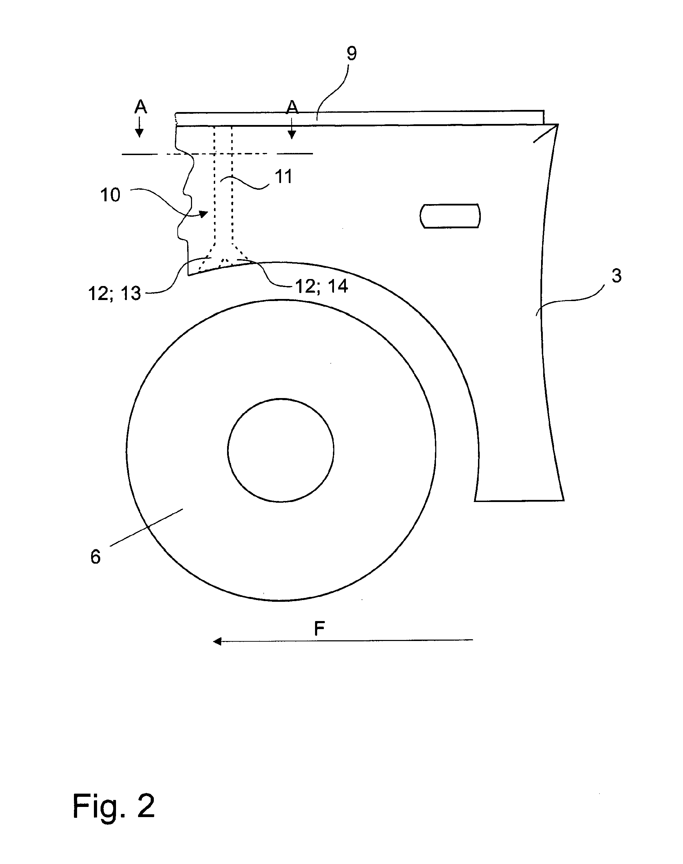

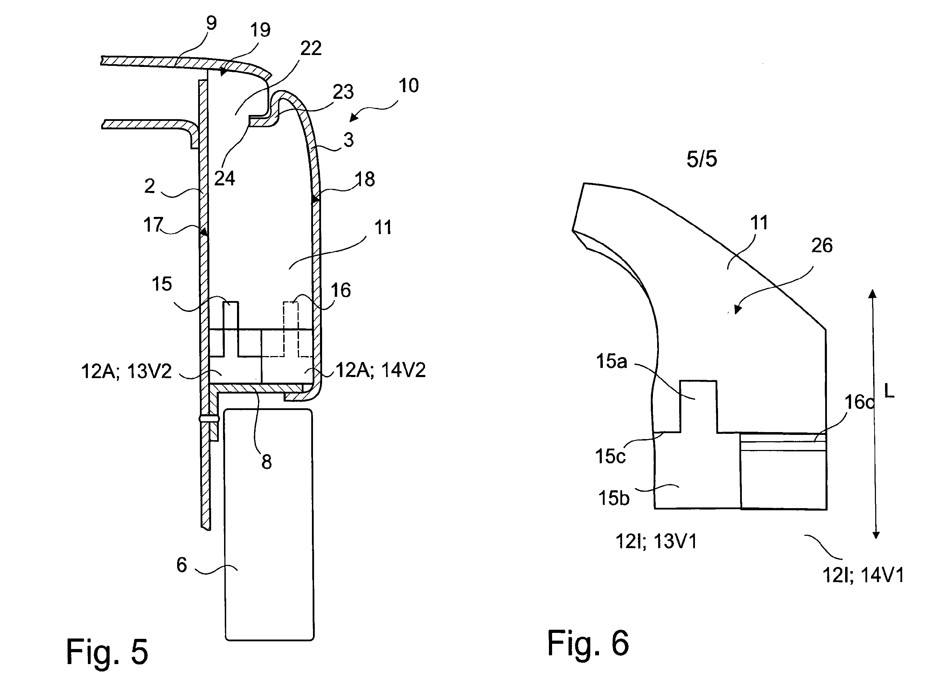

Zwischen dem Karosserieabschnitt 2 und dem Kotflügel 3 ist ein Freiraum 7 gebildet. Nach unten, insbesondere zum Rad 6 hin, ist der Freiraum 7 durch den Schutzmantel 8, der insbesondere als ein sogenannter Fenderliner ausgebildet ist, verschlossen. Nach oben ist der Freiraum 7, wie in den Figuren 2 und 5 gezeigt, durch eine Motorhaube 9 des Fahrzeugs 1 verschlossen.

Das Fahrzeug 1 umfasst eine Isolierungsvorrichtung 10, die im Freiraum 7 zur Geräuschisolierung, insbesondere zur Isolierung von Geräuschen, die im Antriebsbereich 4 erzeugt werden, ausgebildet ist. Weiterhin ist die Isolierungsvorrichtung 10 zur Feuchtigkeitsisolierung, insbesondere gegenüber einer den Fahrgastraum 5 verschließenden Fahrzeugtür 25 ausgebildet. Die Isolierungsvorrichtung 10 ist als ein Schaumformteil, insbesondere als ein Schaumpressformteil, ausgebildet. Hierbei kann es z.B. aus einem Polyethylenschaum (PE-Schaum) sein. Die Isolierungsvorrichtung 10 ist in einem Press-, Dampf- und/oder Schäumprozess herstellbar, wobei zur Herstellung ein ein einfaches Auf-Zu-Werkzeug, z.B. ein Form-, Press-, Pinchwerkzeug, verwendet wird. Dadurch kann eine kostengünstige Herstellung der Isolierungsvorrichtung 10 gewährleistet werden.

Die Isolierungsvorrichtung 10 erstreckt sich im Freiraum 7 über eine gesamte Breite des Freiraums 7, insbesondere füllt die Isolierungsvorrichtung 10 den Freiraum 7 vollständig zwischen dem Karosserieabschnitt 2 und dem Kotflügel 3 aus.

Figur 2 zeigt eine Seitenansicht des Kotflügels 3, wobei hinter dem Kotflügel 3 im Freiraum 7 die Isolierungsvorrichtung 10 verdeckt angeordnet ist. Die Isolierungsvorrichtung 10 erstreckt sich vom Schutzmantel 8 nach oben bis zur Motorhaube 9 (Figur 5). Insbesondere füllt die Isolierungsvorrichtung 10 den Freiraum 7 vollständig zwischen dem Schutzmantel 8 und der Motorhaube 9 aus.

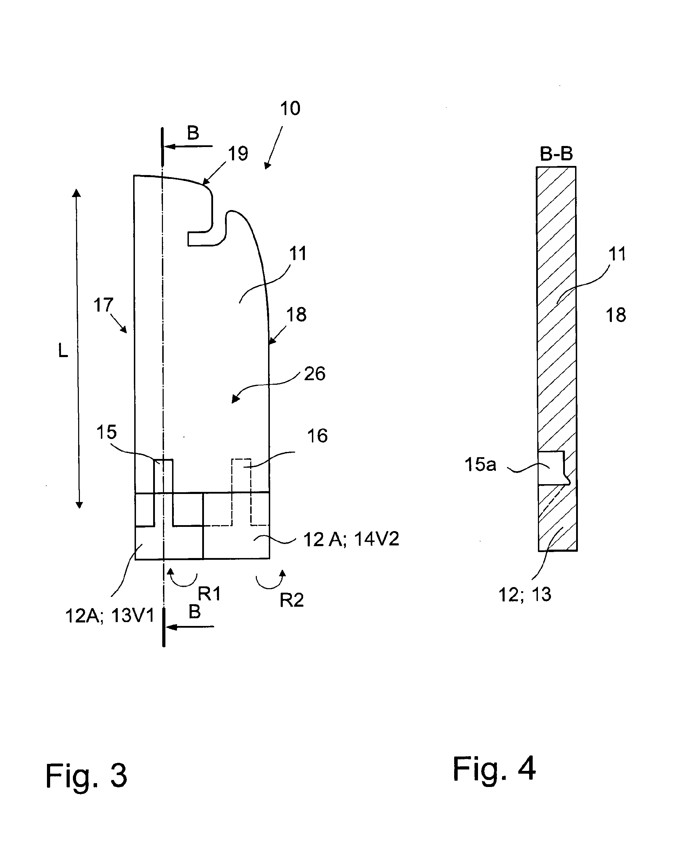

Figur 3 zeigt die Isolierungsvorrichtung 10 in einer Schnittansicht entlang ihrer Längserstreckung L. Die Isolierungsvorrichtung 10 weist einen Grundkörper 11 und eine Sicherungseinrichtung 12 auf. Die Sicherungseinrichtung 12 ist zur richtigen und dauerhaften Positionierung der Isolierungsvorrichtung 10 im Freiraum 7 ausgebildet. Figur 4 zeigt eine Schnittansicht der Isolierungsvorrichtung 10 aus Fig. 3 entlang der Schnittlinie B-B. Der Grundkörper 10 ist in dem Freiraum 7 in einer Ebene senkrecht zu einer Längsachse des Fahrzeugs 1 angeordnet.

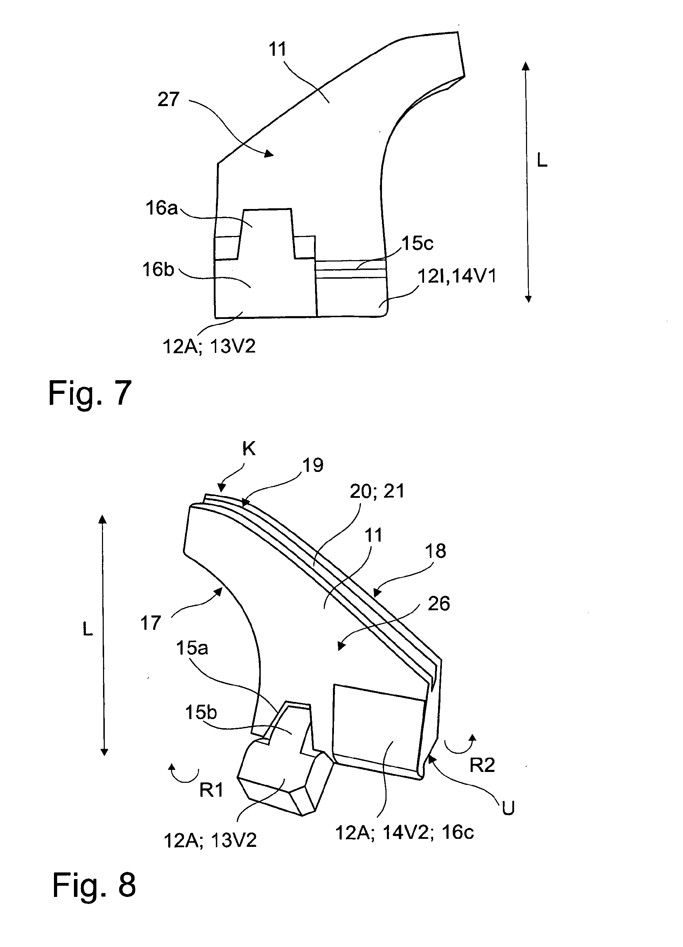

Gemäß Figur 3 weist der Grundkörper 11 eine erste Anlagefläche 17, eine zweite Anlagefläche 18 und eine dritte Anlagefläche 19 auf. Die erste und zweite Anlagefläche 17,18 sind seitlich am Grundkörper 11 angeordnet. Die dritte Anlagefläche 19 ist an einer Kopfseite K (Fig. 8) des Grundkörpers 11, die der Unterseite U (Fig. 8) gegenüberliegt angeordnet. Die erste, zweite und/oder dritte Anlagefläche 17,18,19 weisen zur formschlüssigen Anpassung an den Karosserieabschnitt 2, den Kotflügel 3 bzw. die Motorhaube 9 einen Radius und/oder Radienverlauf auf. Insbesondere können die Anlageflächen 17,18,19 gekrümmt und/oder bogenförmig ausgebildet sein. Alternativ oder optional ergänzend können die erste, zweite und/oder dritte Anlagefläche 17,18,19 zur formschlüssigen Anpassung an den Karosserieabschnitt 2, den Kotflügel 3 bzw. an die Motorhaube 9 eine Freiform und/oder Freikontur, z.B. mit Ecken, Kanten, Aussparungen, etc aufweisen.

Der Grundkörper 11 weist eine erste Seitenfläche 26 und eine zweite Seitenfläche 27 (Fig. 7) auf, wobei die zweite Seitenfläche 27 der ersten Seitenfläche 26 gegenüberliegt.

Die Sicherungseinrichtung 12 ist an der Unterseite U des Grundkörpers 11 angeordnet und umfasst einen ersten schwenkbaren Fuß 13 und einen zweiten schwenkbaren Fuß 14. Der erste und zweite schwenkbare Fuß 13,14 sind quer zu der Längserstreckung L des Grundkörpers 11 verschwenkbar. Hierbei ist der erste Fuß 13 in eine erste Verschwenkrichtung R1 und der zweite Fuß 14 in eine zweite Verschwenkrichtung R2 verschwenkbar, wobei die erste und zweite Verschwenkrichtung R1, R2 (Fig. 3) entgegengesetzt gerichtet sind.

Die Figur 6 zeigt den ersten und zweiten Fuß 13,14 in einer unverschwenkten Stellung V1. In der unverschwenkten Stellung V1 sind die Füße 13,14 gleichgerichtet oder im Wesentlichen gleichgerichtet zur Längserstreckung L des Grundkörpers 11 angeordnet und/oder ausgerichtet. In der unverschwenkten Stellung V1 des ersten Fußes 13 und des zweiten Fußes 14 weist die Sicherungseinrichtung 12 einen inaktiven Zustand I auf. Zur Überführung der Sicherungseinrichtung 12 vom inaktiven Zustand I in einen aktiven Zustand A werden der erste und zweite Fuß 13,14 verschwenkt, insbesondere in eine verschwenkte Stellung V2 (Figur 7 und 8) überführt.

Figur 7 zeigt den ersten Fuß 13 in der verschwenkten Stellung V2 und den zweiten Fuß 14 in der unverschwenkten Stellung V1.

Gemäß den Figuren 7 und 8 nehmen beide Füße 13,14 die verschwenkte Stellung V2 ein, wodurch die Sicherungseinrichtung 12 den aktiven Zustand A aufweist. In der verschwenkten Stellung V2 sind die Füße 13,14 winklig zur Längserstreckung L des Grundkörpers 11 angeordnet. Insbesondere sind die Füße 13,14 in der verschwenkten Stellung V2 in einem Winkel von mindestens 60 Grad, vorzugsweise von mindestens 75 Grad und insbesondere von mindestens 90 Grad gegenüber dem Grundkörper 11 verschwenkt.

Die erste Scharniereinrichtung 15 umfasst eine erste Aufnahme 15a und einen ersten Schwenkeinsatz 15b. Die zweite Scharniereinrichtung 16 umfasst eine zweite Aufnahme 16a und einen zweiten Schwenkeinsatz 16b. Jede Aufnahme 15a,16a ist im Grundkörper 11 integriert, insbesondere in diesen als Aussparung eingeformt und/oder eingeschäumt. Die erste Aussparung 15a ist auf der ersten Seitenfläche 26 des Grundkörpers 11 und die zweite Aussparung 16a auf der zweiten Seitenfläche 27 des Grundkörpers 11. Die erste Aufnahme 15a ist in Fig. 4 deutlich als eine Aussparung im Grundmaterial des Grundkörpers 11 erkennbar.

Wie in den Figuren 6 bis 8 gezeigt ist der erste Schwenkeinsatz 15b als eine Nase oder als ein Fortsatz ausgebildet, der am ersten Fuß 13 angeordnet ist. Der zweite Schwenkeinsatz 16b als eine Nase oder als ein Fortsatz ausgebildet, der am zweiten Fuß 13 angeordnet ist. Insbesondere sind beide der Schwenkeinsätze 15b, 16b an dem jeweiligen Fuß 13, 14 angeformt und/oder an diesen an- oder aufgeschäumt.

In der verschwenkten Stellung V2 des ersten und zweiten Fußes 13, 14 (Fig.7 und 8) ist jeder Schwenkeinsatz 15b, 16b in der ihm zugeordneten Aufnahme 15a, 16a angeordnet und greift in diesen formschlüssig ein. Dadurch ist der Schwenkeinsatz 15b, 16b insbesondere seitlich formschlüssig in der entsprechenden Aufnahme 15a, 16a gesichert, sodass er sich nicht ungewollt aus dieser heraus bewegen kann. Dadurch werden der erste und zweite Fuß 13, 14 sicher in der verschwenkten Stellung V2 gehalten.

Die erste Scharniereinrichtung 15 umfasst ein erstes Filmscharnier 15c und die zweite Scharniereinrichtung 16 umfasst ein zweites Filmscharnier 16c.Beide Filmscharniere sind mit dem Grundkörper 11 stoffschlüssig verbunden, insbesondere an diesen angeformt und/oder angeschäumt oder auf diesen aufgedampft. Der erste Fuß 13 ist über das erste Filmscharnier 15c und der zweite Fuß 14 über das zweite Filmscharnier 16c mit dem Grundkörper 11 schwenkbar verbunden. Das erste Filmscharnier 15c ist auf der Seitenfläche 27 angeordnet, die der Seitenfläche 26 gegenüberliegt, in die die erste Aufnahme 15a integriert ist. Insbesondere ist das erste Filmscharnier 15c mit der zweiten Seitenfläche 27 stoffschlüssig verbunden. Das zweite Filmscharnier 16c ist auf der Seitenfläche 26 angeordnet, die der Seitenfläche 27 gegenüberliegt, in die die zweite Aufnahme 16a integriert ist. Insbesondere ist das zweite Filmscharnier 16c mit der ersten Seitenfläche 26 stoffschlüssig verbunden. Zur Überführung von der unverschwenkten Stellung V1 in die verschwenkte Stellung V2 werden die Scharniereinrichtungen 15c, 16c um die Unterseite U des Grundkörpers 11 herumgeführt und liegen gemäß Fig. 8 in der verschwenkten Stellung V2 an der Unterseite U an.

Figur 5 zeigt die in den Freiraum 7 eingesetzte Isolierungsvorrichtung 10 aus Fig. 3 in einer Schnittansicht senkrecht zur Fahrzeuglängsrichtung L. Die Isolierungsvorrichtung 10 füllt den Freiraum 7 vollständig aus, wobei sie sich von oben nach unten, insbesondere zwischen dem Schutzmantel 8 und der Motorhaube 9 und zu beiden Seiten, insbesondere zwischen dem Karosserieabschnitt 2 und dem Kotflügel 3 erstreckt.

Im Grenzbereich zwischen der Motorhaube 9 und dem Kotflügel 3 ist ein Spalt 22 angeordnet. Der Kotflügel 3 weist an seinem freien Ende im Bereich des Spalts 22 eine Krümmung 23 auf. Zur Montage im Freiraum 7 wird die Isolierungsvorrichtung 10 durch den Spalt 22 in den Freiraum 7 eingeschoben und danach optional ergänzend durch eine Drehung um eine Längsachse der Isolierungsvorrichtung 10 richtig im Freiraum 7 positioniert. Somit liegt die Isolierungsvorrichtung 10 mit der ersten Anlagefläche 17 seitlich an dem Karosserieabschnitt 2 an. Auf der gegenüberliegenden Seite liegt die Isolierungsvorrichtung 10 mit der zweiten Anlagefläche 18 an dem Kotflügel 3 an. Kopfseitig K liegt die Isolierungsvorrichtung 10 mit der dritten Anlagefläche 19 an der Motorhaube 9 an. Zwischen der zweiten Anlagefläche 18 und der dritten Anlagefläche 19 weist der Grundkörper 11 eine gekrümmte Aussparung 24 auf, die an die Krümmung 23 des Kotflügels 3 an seinem freien Ende angepasst ist.

Der Grundkörper 11, insbesondere die Anlageflächen 17,18,19 sind demnach in ihrem Formverlauf, Radius und/oder Radienverlauf an den Formverlauf, Radius und/oder Radienverlauf des Karosserieabschnitts 2, des Kotflügels 3 bzw. der Motorhaube 9 angepasst oder gleichen diesem/dieser. Dadurch kann ein Formschluss zu den Seiten und nach oben erreicht werden, wodurch eine sichere Positionierung der Isoliervorrichtung 10 gewährleistet wird und dadurch ihre Isolierungsfunktion in diesem Bereich voll entfalten kann.

Nach unten, insbesondere zum Schutzmantel 8 hin, steht die Isolierungsvorrichtung 10 mit dem ersten und zweiten Fuß 13,14 auf dem Schutzmantel 8 auf und/oder stützt sich auf diesem ab. Hierbei sind der erste und zweite Fuß 13,14 in der verschwenkten Stellung V2 angeordnet, wodurch die Sicherungseinrichtung 12 den aktiven Zustand A aufweist. Im aktiven Zustand A ist die Isolierungsvorrichtung 10 gegen ein Verrutschen und/oder Verdrehen im Freiraum 7 gesichert. Dadurch kann gewährleistet werden, dass die Isolierungsvorrichtung 10 ihre geräusch- und/oder feuchtigkeitsisolierende Funktion auch während der Fahrt und/oder über eine gesamte Laufzeit des Fahrzeugs 1 sicher umsetzen kann.

Durch das Aufstehen und/oder Abstützen auf den Schutzmantel 8 sind der erste Fuß 13 und der zweite Fuß 14 in ihrer verschwenkten Stellung V2 formschlüssig durch den Schutzmantel 8 gesichert und/oder verrastet, sodass sie aus der verschwenkten Stellung V2 nicht ungewollt herausgelöst werden können.

Figur 8 zeigt die Isolierungsvorrichtung 10 in einer perspektivischen Seitenansicht. Die erste Anlagefläche 17 weist einen Radius und/oder Radienverlauf auf und ist bogenförmig ausgebildet. Die zweite und dritte Anlagefläche 18,19 gehen ineinander in einer Krümmung über.

Der Grundkörper 11 weist an der zweiten und dritten Anlagefläche 18,19 eine offene Höhlung 20 auf, wodurch die Anlageflächen 18,19 eine Wannenform mit zwei von der

Höhlung seitlich begrenzenden Wänden oder Rändern aufweisen. In die offene Höhlung 20 ist eine Einlage 21 einlegbar, die zur Verstärkung der Geräuschs- und/oder Feuchtigkeitsisolation der Isolierungsvorrichtung 10 ausgebildet ist. Die Einlage 21 kann formschlüssig in der offenen Höhlung 20 gehalten werden oder stoffschlüssig mit dem Grundkörper 11 verbunden sein. Insbesondere kann die Einlage in der offenen Höhlung verschweisst, verklebt angeformt oder eingeschäumt sein.

Alternativ zur offenen Höhlung 20 kann der Grundkörper 11 an der zweiten und/oder dritten Anlagefläche 18,19 eine Rippe 28 aufweisen. Die Rippe 28 ist z.B. an der zweiten und/oder dritten Anlagefläche 18,19 angeformt und/oder angeschäumt. Die Rippe 28 dient zur Versteifung des Grundkörpers 11 und zum Toleranzausgleich gegenüber dem Kotflügel 3 und/oder der Motorhaube 9. Dadurch kann die Isolierungswirkung der Isolierungsvorrichtung 10 verstärkt werden.

Zur Montage der Isolierungsvorrichtung 10 wird diese insbesondere bei angehobenem Karosserieabschnitt 2 durch den Spalt 22 in den Freiraum 7 eingesteckt. Optional ergänzend wird die Isolierungsvorrichtung 10 anschließend um ihre Längsachse um z.B. 90 Grad gedreht, bis der seitliche Formschluss gegen den Karosserieabschnitt 2 und gegen den Kotflügel 3 und der kopfseitige Formschluss gegen die Motorhaube 9 gebildet ist. Anschließend wird die Sicherungseinrichtung 12 aktiviert, indem der erste Fuß 13 und der zweite Fuß 14 von der unverschwenkten Stellung V1 in die verschwenkte Stellung V2 überführt werden. Insbesondere werden der erste und der zweite Fuß 13, 14 durch die anschließende Montage des Schutzmantels 8 zwischen dem Karosserieabschnitt 2 und dem Kotflügel 3 gegen ein Zurückschwenken aus der verschwenkten Stellung V2 in die unverschwenkte Stellung V1 formschlüssig nach unten gesichert.

Während vorstehend mindestens ein Ausführungsbeispiel detailliert offenbart wurde, ist es anzuerkennen, dass eine Vielzahl von erfindungsgemäßen Variationen existieren. Es ist ebenfalls anzuerkennen, dass das mindestens eine Ausführungsbeispiel nur beispielhaften Charakter hat und keine Begrenzung des Schutzumfangs, der Anwendungsgebiete oder der Konfiguration darstellt. Vielmehr soll die vorliegende Offenbarung einen angenehmen Fahrplan zur Umsetzung mindestens eines Ausführungsbeispiels sein. Somit sollte es anzuerkennen sein, dass verschiedene Variationen der Funktion oder der Anordnung der Elemente des mindestens einen Ausführungsbeispiels umgesetzt werden können, ohne den Umfang zu verlassen, der durch die Ansprüche und deren rechtmäßigen Äquivalente vorgegeben ist.

### Bezugszeichenliste:

- 1: Fahrzeug
- 2: Karosserieabschnitt
- 3: Kotflügel
- 4: Antriebsbereich
- 4a: Motorblock
- 4b: Antriebswelle
- 5: Fahrgastraum
- 6: Rad
- 7: Freiraum
- 8: Schutzmantel
- 9: Motorhaube
- 10: Isolierungsvorrichtung
- 11: Grundkörper
- 12: Sicherungseinrichtung
- 13: Erster schwenkbarer Fuß
- 14: Zweiter schwenkbarer Fuß
- 15: Erste Scharniereinrichtung
- 15a: erste Aufnahme
- 15b: erster Schwenkeinsatz
- 15c: erstes Filmscharnier
- 16: Zweite Scharniereinrichtung
- 16a: zweite Aufnahme
- 16b: zweiter Schwenkeinsatz
- 16c: zweites Filmscharnier
- 17: Erste Anlagefläche
- 18: Zweite Anlagefläche
- 19: Dritte Anlagefläche
- 20: Offene Höhlung
- 21: Einsatz
- 22: Spalt
- 23: Krümmung
- 24: gekrümmte Aussparung
- 25: Fahrzeugtür
- 26: erste Seitenfläche
- 27: zweite Seitenfläche
- 28: Rippe

- A: aktiver Zustand
- I: inaktiver Zustand
- F: Fahrzeuglängsrichtung
- L: Längserstreckung Isolierungvorrichtung / Grundkörper
- R1: erste Verschwenkrichtung
- R2: zweite Verschwenkrichtung
- V1: unverschwenkte Stellung
- V2: verschwenkte Stellung

## Patentansprüche

1. Isolierungsvorrichtung (10) für ein Fahrzeug zur geräusch- und/oder feuchtigkeitsisolierenden Anordnung in einem Freiraum (7) zwischen einem Karosserieabschnitt (2) des Fahrzeugs (1), einem Kotflügel (3) des Fahrzeugs (1), einem Schutzmantel (8) des Fahrzeugs und einer Motorhaube (9) des Fahrzeugs (1),
wobei die Isolierungsvorrichtung (10) eine Sicherungseinrichtung (12) zur richtigen und dauerhaften Positionierung der Isolierungsvorrichtung (10) im Freiraum (7) aufweist,
wobei die Sicherungseinrichtung (12) einen ersten verschwenkbaren Fuß (13) und einen zweiten verschwenkbaren Fuß (14) umfasst.

2. Isolierungsvorrichtung (10) nach Anspruch 1, wobei die Isolierungsvorrichtung (10) einen Grundkörper (11) aufweist, wobei der erste Fuß (13) zur Überführung der Sicherungseinrichtung (12) von einem inaktiven Zustand (I) in einen aktiven Zustand (A) quer zu einer Längserstreckung (L) des Grundkörpers (11) in eine erste Verschwenkrichtung (R1) verschwenkbar ist und wobei der zweite Fuß (14) quer zu einer Längserstreckung (L) des Grundkörpers (11) in eine zweite Verschwenkrichtung (R2) verschwenkbar ist, wobei die erste Verschwenkrichtung (R1) entgegengesetzt zur zweiten Verschwenkrichtung (R2) gerichtet ist.

3. Isolierungsvorrichtung (10) nach Anspruch 1 oder 2, wobei die Sicherungseinrichtung (12) eine erste Scharniereinrichtung (15) und eine zweite Scharniereinrichtung (16) aufweist, wobei der erste Fuß (13) und der Grundkörper (11) über die erste Scharniereinrichtung (15) miteinander schwenkbar verbunden sind und wobei der zweite Fuß (14) und der Grundkörper (11) über die zweite Scharniereinrichtung (16) miteinander verbunden sind, wobei die erste Scharniereinrichtung (15) eine erste Aufnahme (15a) und einen ersten Schwenkeinsatz (15b) umfasst, wobei die zweite Scharniereinrichtung (16) eine zweite Aufnahme (16a) und einen zweiten Schwenkeinsatz (16b) umfasst, wobei der erste Schwenkeinsatz (15b) zum formschlüssigen Eingriff in die erste Aufnahme (15a) und der zweite Schwenkeinsatz (16a) zum formschlüssigen Eingriff in die zweite Aufnahme (16a) ausgebildet ist.

4. Isolierungsvorrichtung (10) nach Anspruch 3, wobei die erste Aufnahme (15a) in einer ersten Seitenfläche (26) des Grundkörpers (11) integriert ist und wobei die zweite Aufnahme (16a) in einer zweiten Seitenfläche (27) des Grundkörpers (11) integriert ist, wobei die erste Seitenfläche (26) gegenüber der zweiten Seitenfläche (27) angeordnet ist.

5. Isolierungsvorrichtung nach Anspruch 3 oder 4, wobei der erste Schwenkeinsatz (15b) an dem ersten Fuß (13) und wobei der zweite Schwenkeinsatz (16b) an dem zweiten Fuß (14) angeordnet ist.

6. Isolierungsvorrichtung (10) nach einem der Ansprüche 3 bis 5, wobei der erste Schwenkeinsatz (15b) in der ersten Aufnahme (15a) formschlüssig befestigbar ist, wobei die erste Aufnahme (15a) einen Endanschlag für den ersten Schwenkeinsatz (15b) bildet und wobei der zweite Schwenkeinsatz (16b) in der zweiten Aufnahme (16a) formschlüssig befestigbar ist, wobei die zweite Aufnahme (16a) einen Endanschlag für den zweiten Schwenkeinsatz (16b) bildet.

7. Isolierungsvorrichtung (10) nach einem der Ansprüche 3 bis 6, wobei die erste Scharniereinrichtung (15) ein erstes Filmscharnier (15c) und die zweite Scharniereinrichtung (16) ein zweites Filmscharnier (16c) umfasst, wobei der Grundkörper (11) über das erste Filmscharnier (15c) schwenkbar mit dem ersten Fuß (13) verbunden ist und wobei der Grundkörper (11) über das zweite Filmscharnier (16c) schwenkbar mit dem zweiten Fuß (14) verbunden ist.

8. Isolierungsvorrichtung (10) nach Anspruch 7, wobei das erste Filmscharnier (15c) mit dem ersten Fuß (13) und mit der zweiten Seitenfläche (27) des Grundkörpers (11) stoffschlüssig verbunden ist und wobei das zweite Filmscharnier (16c) mit dem zweiten Fuß (14) und mit der ersten Seitenfläche (26) des Grundkörpers (11) stoffschlüssig verbunden ist.

9. Isolierungsvorrichtung (10) nach einem der Ansprüche 2 bis 8, wobei der Grundkörper (11) eine erste Anlagefläche (17) zur Anlage an dem Karosserieabschnitt (2), eine zweite Anlagefläche (18) zur Anlage an den Kotflügel (3) und eine dritte Anlagefläche (19) zur Anlage an der Motorhaube (9) aufweist.

10. Isolierungsvorrichtung (10) nach Anspruch 9, wobei die erste, zweite und/oder dritte Anlagefläche (17, 18, 19) einen Formverlauf, Radius und/oder Radienverlauf aufweist, der an den Formverlauf des Karosserieabschnitts (2), des Kotflügels (3) bzw. der Motorhaube (9) angepasst ist und/oder diesem gleicht.

11. Isolierungsvorrichtung (10) nach einem der vorhergehenden Ansprüche, wobei der Grundkörper (11), der erste Fuß (13) und der zweite Fuß (14) als ein Schaumformteil ausgebildet ist.

12. Isolierungsvorrichtung (10) nach einem der Ansprüche 2 bis 11, wobei der Grundkörper (11) eine offene Höhlung (20) mit einem Einsatz (21) oder eine Rippe (28) zur Verstärkung der Geräusch- und/oder Feuchtigkeitsisolation aufweist.

13. Fahrzeug (1) mit einem Karosserieabschnitt (2), einem Kotflügel (3), einem Schutzmantel (8) und einer Motorhaube (9), wobei das Fahrzeug (1) die Isolierungsvorrichtung (10) nach einem der vorhergehenden Ansprüche umfasst.

14. Fahrzeug (1) nach Anspruch 13, wobei der erste Fuß (13) und der zweiten Fuß (14) der Isolierungsvorrichtung (10) im aktiven Zustand (A) der Sicherungseinrichtung (12) auf dem Schutzmantel (8) aufstehen und die Isolierungsvorrichtung (10) gegen ein Verrutschen und/oder Verdrehen im Freiraum (7) formschlüssig sichern.

15. Fahrzeug (1) nach Anspruch 13 oder 14, wobei der Grundkörper (11) formschlüssig zwischen dem Karosserieabschnitt (2), dem Kotflügel (3) und der Motorhaube (9) befestigt ist.
